# EUROPEAN PATENT APPLICATION

(11) **EP 4 228 039 A1**
(43) Date of publication of application: **16.08.2023**
(21) Application number: 21877216.8
(22) Date of filing: 02.08.2021
(51) Int. Cl.: H01M 8/04186, H01M 8/04537, H01M 8/04858, H01M 8/18, H01M 8/2455, H01M 8/249

(54) **REDOX FLOW BATTERY OPERATION METHOD , AND REDOX FLOW BATTERY SYSTEM**

(30) Priority: 06.10.2020 JP 2020169447
(71) Applicant: SUMITOMO ELECTRIC INDUSTRIES, LTD., Osaka-shi, Osaka 541-0041 (JP)
(72) Inventor: HANAFUSA, Kei, Osaka-shi, Osaka 541-0041 (JP); KAKU, Hirokazu, Osaka-shi, Osaka 541-0041 (JP); TATSUMI, Ryouta, Osaka-shi, Osaka 541-0041 (JP); NAITO, Yasuhiro, Osaka-shi, Osaka 541-0041 (JP)
(74) Representative: Boult Wade Tennant LLP
(86) International application number: PCT/JP2021/028620
(87) International publication number: WO 2022/074912

(57) **Abstract**

A redox flow battery operation method that performs charge and discharge by circulating an electrolyte between a tank and a first battery cell, the method includes a main process performing the charge at a current density greater than or equal to 250 mA/cm².

## Description

### TECHNICAL FIELD

The present disclosure relates to a redox flow battery operation method and a redox flow battery system.

This application claims priority based on Japanese Patent Application No. 2020-169447 filed on October 6, 2020, the entire contents of which are incorporated herein by reference.

### BACKGROUND ART

PTL 1 discloses a manganese-titanium-based redox flow battery using a positive electrolyte containing manganese ions and a negative electrolyte containing titanium ions. When the positive electrolyte contains manganese ions, manganese oxide (MnO₂) can be precipitated along with charge and discharge. In PTL 1, the precipitation of the manganese oxide is prevented by containing titanium ions in addition to the manganese ions in the positive electrolyte.

### CITATION LIST

### PATENT LITERATURE

PTL 1: WO 2011/111254

### SUMMARY OF INVENTION

A redox flow battery operation method of the present disclosure is a redox flow battery operation method for performing charge and discharge by circulating an electrolyte between a tank and a first battery cell, and
the method includes a main process that performs the charge at a current density greater than or equal to 250 mA/cm².

A redox flow battery system of the present disclosure includes:
a first battery cell;
a tank in which an electrolyte circulated in the first battery cell is stored; and
a controller that controls charge and discharge of the first battery cell using the electrolyte,
in which the controller performs control to perform at least part of the charge at a current density greater than or equal to 250 mA/cm² based on a charge state of the electrolyte.

### BRIEF DESCRIPTION OF DRAWINGS

Fig. 1 is a schematic configuration diagram illustrating a redox flow battery system according to a first embodiment.
Fig. 2 is a flowchart illustrating a processing procedure of the method for operating the redox flow battery of the first embodiment.
Fig. 3 is an explanatory view illustrating the method for operating the redox flow battery of the first embodiment.
Fig. 4 is an explanatory diagram illustrating an example of waveforms of pulse charge and pulse discharge used in the method for operating the redox flow battery of the first embodiment.
Fig. 5 is an explanatory diagram illustrating another example of the waveforms of the pulse charge and the pulse discharge used in the method for operating the redox flow battery of the first embodiment.
Fig. 6 is an explanatory diagram illustrating still another example of the waveforms of the pulse charge and the pulse discharge used in the method for operating the redox flow battery of Embodiment 1.
Fig. 7 is an explanatory diagram illustrating yet another example of the waveforms of the pulse charge and the pulse discharge used in the method for operating the redox flow battery of Embodiment 1.
Fig. 8 is an explanatory diagram illustrating even another example of waveforms of pulse charge and pulse discharge used in the method for operating a redox flow battery of Embodiment 1.
Fig. 9 is an enlarged view schematically illustrating an electrolyte obtained by the method for operating the redox flow battery of the first embodiment.
Fig. 10 is an explanatory diagram illustrating a method for operating a redox flow battery according to a second embodiment.
Fig. 11 is an explanatory diagram illustrating a redox flow battery system according to a third embodiment.
Fig. 12 is an explanatory diagram illustrating a redox flow battery system according to a fourth embodiment.

### DETAILED DESCRIPTION

### [Problem to be Solved by the Present Disclosure]

A redox flow battery having high energy density is desired.

For example, a concentration of an active material ion in an electrolyte may be increased in order to improve the energy density. However, the ion concentration in the electrolyte is limited to solubility. In addition, when the ion concentration is increased, precipitation of an oxide is likely to be generated.

In the redox flow battery, the electrolyte to a region having a high state of charge (SOC) is required to be charged from the viewpoint of increasing energy density. However, in the region where the SOC is high, a dissolved state of the ion in the electrolyte is unstable, and an oxide is likely to be generated. For example, a manganese ion in the positive electrolyte is oxidized from a divalent ion (Mn²⁺) to a trivalent ion (Mn³⁺) during charge. However, Mn³⁺ is unstable and quickly reacts with water to change to MnO₂. In particular, when charge and discharge are repeated for a long period of time or when the electrolyte is on standby for a long period of time while the SOC of the electrolyte is high, there is a fear that a deposited oxide grows and becomes coarse.

When the oxide of the active material ion is coarsened and precipitates in a tank storing the electrolyte, an active material in the electrolyte decreases. The precipitated oxide is not redissolved in the electrolyte and hardly used as the active material. When the active material in the electrolyte decreases, battery capacity decreases, which leads to a decrease in energy density. In addition, the coarsened oxide adheres to an electrode, a pipe, or the like, which causes degradation of a flow of the electrolyte. Accordingly, it is desirable that the oxide precipitated as a solid phase exists stably in the electrolyte.

An object of the present disclosure is to provide a redox flow battery operation method in which the precipitated solid phase can exist stably in the electrolyte. Another object of the present disclosure is to provide a redox flow battery system in which the precipitated solid phase can exist stably in the electrolyte.

### [Advantageous Effect of the Present Disclosure]

In the redox flow battery operation method of the present disclosure, a precipitated solid phase can exist stably in the electrolyte. In the redox flow battery system of the present disclosure, the precipitated solid phase can exist stably in the electrolyte.

### [Description of Embodiments]

First, embodiments of the present disclosure will be listed and described.
(1) A redox flow battery operation method according to an aspect of the present disclosure is a redox flow battery operation method for performing charge and discharge by circulating an electrolyte between a tank and a first battery cell, and the method includes a main process that performs the charge at a current density greater than or equal to 250 mA/cm².

In the redox flow battery operation method of the present disclosure, the charge is performed at the current density greater than or equal to 250 mA/cm², so that the solid phase that can float in the electrolyte can be obtained even when the solid phase such as the oxide is precipitated. At this point, "floating" means that sedimentation by gravity is hardly generated.

The present inventors have found that the floatable solid phase can exist stably in the electrolyte. Because the precipitated solid phase exists stably, the above-described problem caused by coarsening of the solid phase is hardly generated. Accordingly, the redox flow battery operation method of the present disclosure can prevent the degradation of the flow of the electrolyte due to the coarse solid phase. The redox flow battery operation method of the present disclosure can be operated as the redox flow battery having high energy density. Furthermore, the redox flow battery operation method of the present disclosure can be used for manufacturing the electrolyte having the high energy density.

(2) As an example of the redox flow battery operation method of the present disclosure,
the redox flow battery operation method includes a preparation process that performs the charge such that a charge state of the electrolyte is greater than or equal to 60% and less than or equal to 100%,
in which the main process is performed after the preparation process.

In the above mode, the solid phase that can float in the electrolyte is easily precipitated. Accordingly, in the above mode, the precipitated solid phase can exist more stably in the electrolyte.

(3) As an example of the redox flow battery operation method of the present disclosure,
the redox flow battery operation method includes a pulse process that alternately and repeatedly performs pulse charge and pulse discharge,
in which the pulse process includes the main process, and
the pulse charge is performed in the main process.

In the above mode, the solid phase that can float in the electrolyte is easily precipitated. Accordingly, in the above mode, the precipitated solid phase can exist more stably in the electrolyte.

(4) As an example of the redox flow battery operation method of the present disclosure comprising a pulse process,
a charge time per cycle in the pulse charge is greater than or equal to 1 second and less than or equal to 10 minutes.

In the above mode, the solid phase that can float in the electrolyte is easily precipitated. Accordingly, in the above mode, the precipitated solid phase can exist more stably in the electrolyte.

(5) As an example of the redox flow battery operation method of the present disclosure comprising a pulse process,
the redox flow battery operation method includes a sub-process that sequentially performs the discharge and the charge once between a plurality of pulse processes, the pulse process being performed a plurality of times,
in which a change amount in the charge state of the electrolyte in the sub-process is larger than a change amount in the charge state of the electrolyte in the pulse process.

In the above mode, the solid phase that can float in the electrolyte is more easily precipitated.

(6) As an example of the redox flow battery operation method of the present disclosure,
the main process is performed by circulating a positive electrolyte and a negative electrolyte in a second battery cell,
the second battery cell is provided separately from the first battery cell,
the tank includes:
   a positive electrolyte tank in which the positive electrolyte is stored; and
   a negative electrolyte tank in which the negative electrolyte is stored, and
   each of the first battery cell and the second battery cell is connected to the positive electrolyte tank and the negative electrolyte tank.

When the first battery cell is used for the operation of the redox flow battery with the charge at the current density greater than or equal to 250 mA/cm², there is a fear that the first battery cell is damaged. In the above mode, the charge is performed at the current density greater than or equal to 250 mA/cm² using the second battery cell provided separately from the first battery cell. Accordingly, in the above mode, the first battery cell can be prevented from being damaged by the charge.

(7) As an example of the redox flow battery operation method of the present disclosure,
the main process is performed by circulating a positive electrolyte or a negative electrolyte in a second battery cell,
the second battery cell is provided separately from the first battery cell,
the tank includes:
   a positive electrolyte tank in which the positive electrolyte is stored; and
   a negative electrolyte tank in which the negative electrolyte is stored,
   the first battery cell is connected to the positive electrolyte tank and the negative electrolyte tank, and
   the second battery cell is connected to the positive electrolyte tank or the negative electrolyte tank.

In addition to the effect of the mode described in (6), the above mode has an effect that the solid phase that can float in the electrolyte of either the positive electrolyte or the negative electrolyte can be efficiently precipitated. In the above mode, the charge is performed by circulating either the positive electrolyte or the negative electrolyte in the second battery cell. Accordingly, a large amount of the electrolyte can be circulated to the second battery cell as compared with the case where the positive electrolyte is circulated to the positive electrode cell in the second battery cell while the negative electrolyte is circulated to the negative electrode cell of the second battery cell. Consequently, in the above mode, the time precipitating the solid phase that can float in the positive electrolyte or the negative electrolyte can be shortened.

(8) A redox flow battery system according to one aspect of the present disclosure includes:
a first battery cell;
a tank in which an electrolyte circulated in the first battery cell is stored; and
a controller that controls charge and discharge of the first battery cell using the electrolyte,
in which the controller performs control to perform at least part of the charge at a current density greater than or equal to 250 mA/cm² based on a charge state of the electrolyte.

The redox flow battery system of the present disclosure can obtain the solid phase that can float in the electrolyte even when the solid phase such as the oxide is precipitated. The floatable solid phase can exist stably in the electrolyte. Accordingly, the redox flow battery system of the present disclosure can prevent degradation of the flow of the electrolyte due to the coarse solid phase. In addition, the redox flow battery system of the present disclosure can be used for manufacturing the electrolyte having the high energy density.

(9) As an example of the redox flow battery system of the present disclosure,
the controller performs control to perform the charge at the current density greater than or equal to 250 mA/cm² when the charge state of the electrolyte is greater than or equal to 60% and less than or equal to 100%.

In the above mode, the solid phase that can float in the electrolyte is easily precipitated. Accordingly, in the above mode, the precipitated solid phase can exist more stably in the electrolyte.

(10) As an example of the redox flow battery system of the present disclosure,
the controller performs control such that pulse charge and pulse discharge are alternately and repeatedly performed and such that the pulse charge is performed at the current density greater than or equal to 250 mA/cm².

In the above mode, the solid phase that can float in the electrolyte is easily precipitated. Accordingly, in the above mode, the precipitated solid phase can exist more stably in the electrolyte.

(11) As an example of the redox flow battery system of the present disclosure,
the controller controls the first battery cell to perform the charge at the current density greater than or equal to 250 mA/cm².

In the above mode, because the charge is performed by the single battery cell, the configuration is simple.

(12) As an example of the redox flow battery system of the present disclosure,
the redox flow battery system further includes a second battery cell provided separately from the first battery cell,
in which the tank includes:
   a positive electrolyte tank in which a positive electrolyte is stored; and
   a negative electrolyte tank in which a negative electrolyte is stored,
   each of the first battery cell and the second battery cell is connected to the positive electrolyte tank and the negative electrolyte tank, and
   the controller controls the second battery cell to perform the charge at the current density greater than or equal to 250 mA/cm².

When the first battery cell is used for the operation of the redox flow battery with the charge at the current density greater than or equal to 250 mA/cm², there is a fear that the first battery cell is damaged. In the above mode, the charge is performed at the current density greater than or equal to 250 mA/cm² using the second battery cell provided separately from the first battery cell. Accordingly, in the above mode, the first battery cell can be prevented from being damaged by the charge.

(13) As an example of a redox flow battery system of the present disclosure,
the redox flow battery system further includes a second battery cell provided separately from the first battery cell,
in which the tank includes:
   a positive electrolyte tank in which a positive electrolyte is stored; and
   a negative electrolyte tank in which a negative electrolyte is stored,
   the first battery cell is connected to the positive electrolyte tank and the negative electrolyte tank,
   the second battery cell is connected to the positive electrolyte tank or the negative electrolyte tank, and
   the controller controls the second battery cell to perform the charge at the current density greater than or equal to 250 mA/cm².

In addition to the effect of the mode described in (12), the above mode has an effect that the solid phase that can float in the electrolyte of either the positive electrolyte or the negative electrolyte can be efficiently precipitated. In the above mode, the charge is performed by circulating either the positive electrolyte or the negative electrolyte in the second battery cell. Accordingly, a large amount of the electrolyte can be circulated to the second battery cell as compared with the case where the positive electrolyte is circulated to the positive electrode cell in the second battery cell while the negative electrolyte is circulated to the negative electrode cell of the second battery cell. Consequently, in the above mode, the time precipitating the solid phase that can float in the positive electrolyte or the negative electrolyte can be shortened.

### [Detailed Embodiments of the Present Disclosure]

With reference to the drawings, embodiments of the present disclosure will be described in detail. In the drawings, the same reference numerals indicate the same names.

### <<First embodiment>>

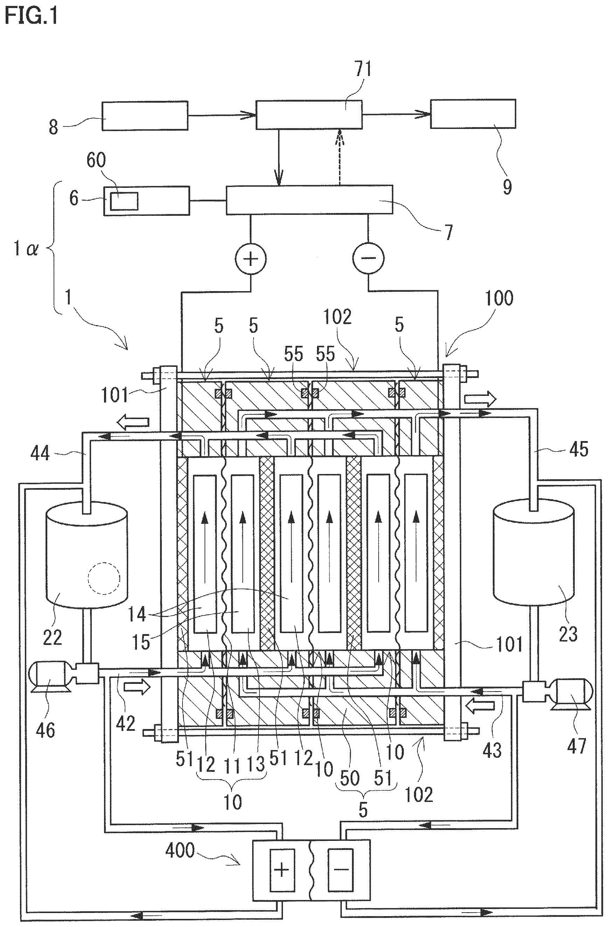

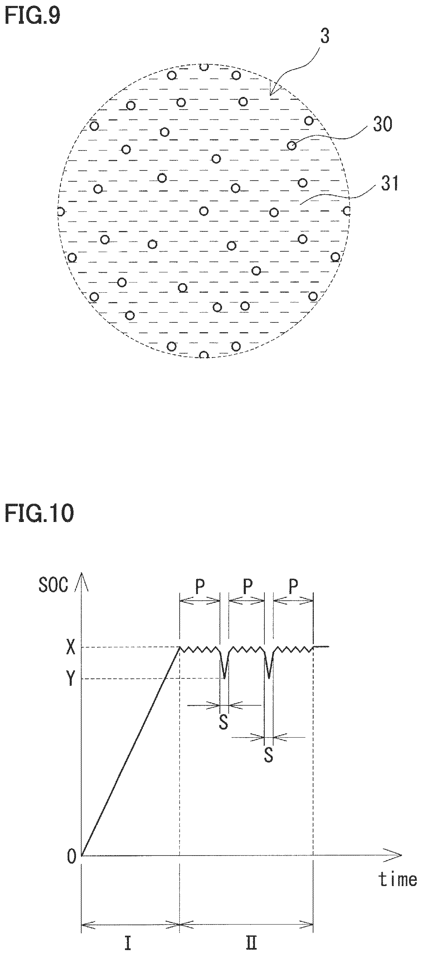

With reference to Fig. 1, a redox flow battery system according to a fist embodiment will be described. Thereafter, with reference to Figs. 1 to 8, a method for operating a redox flow battery of the first embodiment will be described. Thereafter, with reference to Fig. 9, an electrolyte obtained by the method for operating the redox flow battery of the first embodiment will be described. Hereinafter, the redox flow battery is referred to as an "RF battery". A state of charge of the electrolyte is referred to as "SOC".

### <RF battery system>

An RF battery system 1α includes an RF battery 1 and a controller 6.

### [RF Battery]

RF battery 1 is one of electrolyte circulation storage batteries. RF battery 1 includes a battery cell 10 and a circulation mechanism that circulates the electrolyte through battery cell 10. RF battery 1 performs charge and discharge while supplying the electrolyte to battery cell 10. At this point, "battery cell 10" refers to a first battery cell defined in the claims.

RF battery 1 is typically connected to a power generation unit 8 and a load 9 through a transformer facility 71 and a power converter 7. RF battery 1 performs the charge using power generation unit 8 as a power supply source, and performs the discharge using load 9 as a power supply target. Examples of power generation unit 8 include a solar power generator, a wind power generator, and other general power plants. Examples of load 9 include a power system and a consumer of power. RF battery 1 is used for load leveling, instantaneous voltage drop compensation, an emergency power supply, output smoothing of natural energy power generation such as solar power generation and wind power generation, and the like.

Controller 6 issues an instruction to power converter 7. Power converter 7 charges and discharges battery cell 10 based on the instruction from controller 6. That is, controller 6 controls the charge and the discharge of battery cell 10 through power converter 7. For example, an AC/DC conversion device can be used as power converter 7.

### <Battery cell>

Battery cell 10 is separated into a positive electrode cell 12 and a negative electrode cell 13 by a membrane 11. A positive electrode 14 is built in positive electrode cell 12. A positive electrolyte is supplied to positive electrode cell 12. A negative electrode 15 is built in negative electrode cell 13. A negative electrolyte is supplied to negative electrode cell 13. Battery cell 10 is configured to be sandwiched between a set of cell frames 5. Cell frame 5 includes a bipolar plate 51 and a frame body 50. Positive electrode 14 is disposed on a surface of bipolar plate 51, and negative electrode 15 is disposed on the back surface of bipolar plate 51. Frame body 50 is provided on an outer periphery of bipolar plate 51. Frame body 50 supports bipolar plate 51. A seal member 55 is disposed between frame bodies 50 in order to prevent leakage of the electrolyte from battery cells 10.

RF battery 1 is typically used in a mode called a cell stack 100 in which a plurality of battery cells 10 are laminated. Cell stack 100 includes a multilayer body in which certain cell frame 5, positive electrode 14, membrane 11, negative electrode 15, and another cell frame 5 are repeatedly laminated, a pair of end plates 101 sandwiching the laminate body, and a fastening member 102. Examples of fastening member 102 include a coupling member such as a long bolt and a nut. The pair of end plates 101 is fastened by fastening member 102. A multilayer state of the multilayer body is maintained by this fastening. Typically, cell stack 100 is used in a mode in which a predetermined number of battery cells 10 are used as a sub-stack (not illustrated) and a plurality of sub-stacks are laminated. A supply/drainage plate (not illustrated) is disposed outside cell frames 5 located at both ends in a multilayer direction of battery cells 10 in the sub-stack and cell stack 100.

### <Circulation mechanism>

The circulation mechanism includes a positive electrode circulation mechanism that circulates the positive electrolyte to positive electrode cell 12 and a negative electrode circulation mechanism that circulates the negative electrolyte to negative electrode cell 13. The positive electrode circulation mechanism includes a positive electrolyte tank 22, a supply pipe 42, a return pipe 44, and a pump 46. Positive electrolyte tank 22 stores a positive electrolyte. Supply pipe 42 and return pipe 44 connect positive electrolyte tank 22 and positive electrode cell 12. Pump 46 is provided in supply pipe 42 on the supply side. The negative electrode circulation mechanism includes a negative electrolyte tank 23, a supply pipe 43, a return pipe 45, and a pump 47. Negative electrolyte tank 23 stores a negative electrolyte. Supply pipe 43 and return pipe 45 connect negative electrolyte tank 23 and negative electrode cell 13. Pump 47 is provided in supply pipe 43 on the supply side.

The positive electrolyte is supplied from positive electrolyte tank 22 to positive electrode 14 through supply pipe 42, and returned from positive electrode 14 to positive electrolyte tank 22 through return pipe 44. The negative electrolyte is supplied from negative electrolyte tank 23 to negative electrode 15 through supply pipe 43, and returned from negative electrode 15 to negative electrolyte tank 23 through return pipe 45. When the positive electrolyte is circulated to positive electrode 14 while the negative electrolyte is circulated to negative electrode 15, the charge and the discharge are performed along with a valence change reaction of the active material ion in the electrolyte of each electrode by circulating.

### <Electrolyte>

The electrolyte is an aqueous solution containing the active material ion. The active material ion is an ion of an element that becomes an active material. The electrolyte contains at least one ion selected from an α group consisting of a titanium (Ti) ion, a chromium (Cr) ion, a manganese (Mn) ion, a zinc (Zn) ion, an iron (Fe) ion, a cobalt (Co) ion, a cerium (Ce) ion, and a vanadium (V) ion as the active material ion. The ions listed in the α group react with water contained in the aqueous solution to precipitate an oxide during the charge. For example, as for the Mn ion, a trivalent Mn ion reacts with water during the charge, and MnO₂ that is the oxide can be precipitated.

A Mn-Ti-based electrolyte in which the positive electrode active material is the Mn ion while the negative electrode active material is the Ti ion can be cited as an example of the electrolyte. In addition, a total V-based electrolyte in which both the positive electrode active material and the negative electrode active material are the V ion can be cited. In addition, an Fe-Cr-based electrolyte in which the positive electrode active material is the Fe ion while the negative electrode active material is the Cr ion can be cited.

For example, a sulfuric acid (H₂SO₄) aqueous solution, a phosphoric acid (H₃PO₄) aqueous solution, and a nitric acid (HNO₃) aqueous solution can be used as the aqueous solution. The concentration of the aqueous solution is greater than or equal to 1 mol/L or and less than or equal to 5 mol/L, further greater than or equal to 1 mol/L and less than or equal to 4.5 mol/L, and particularly greater than or equal to 1 mol/L and less than or equal to 4 mol/L.

A known configuration can be appropriately used as the basic configuration of RF battery 1 described above.

### [Controller]

Controller 6 typically controls power converter 7 to control the charge and the discharge of battery cell 10 using the electrolyte. One of the features of RF battery system 1α of the first embodiment is that controller 6 controls the performance of at least part of the charge at current density greater than or equal to 250 mA/cm² based on the SOC of the electrolyte. Controller 6 of the example performs the control of the charge at the current density greater than or equal to 250 mA/cm² when the SOC of the electrolyte is greater than or equal to 60% and less than or equal to 100%. Specifically, controller 6 of the example controls the operation of RF battery 1 so as to perform the first charge in which the SOC of the electrolyte is set greater than or equal to 60% and less than or equal to 100%, and then perform the second charge at the current density greater than or equal to 250 mA/cm². In addition, controller 6 of the example controls battery cell 10 to perform the first charge and the second charge.

For example, a computer can be used as controller 6. The computer typically includes a processor 60 and a memory (not illustrated). For example, processor 60 is a CPU. Controller 6 is operated by processor 60 executing a control program stored in the memory.

A known technique can be used to grasp the SOC of the electrolyte. RF battery system 1α includes an SOC measurement portion that measures the SOC of the electrolyte. RF battery system 1α of this example includes a monitor cell 400 as the SOC measurement portion. Fig. 1 illustrates a mode in which monitor cell 400 is configured of one battery cell for easy understanding.

The electrolyte is circulated in monitor cell 400. Monitor cell 400 of this example is provided separately from cell stack 100. In monitor cell 400, the positive electrolyte is supplied from a branch pipe provided in supply pipe 42, and the negative electrolyte is supplied from a branch pipe provided in supply pipe 43. The positive electrolyte supplied to monitor cell 400 is returned to positive electrolyte tank 22 from a branch pipe provided in return pipe 44. The negative electrolyte supplied to monitor cell 400 is returned to negative electrolyte tank 23 from a branch pipe provided in return pipe 45. Monitor cell 400 does not perform the charge and the discharge. Monitor cell 400 is used to obtain the SOC of the electrolyte. The SOC is obtained by measuring an open circuit voltage (OCV) at monitor cell 400 with a voltmeter. Monitor cell 400 measures the SOC of the electrolyte before being supplied to battery cell 10. The SOC measured by monitor cell 400 is the SOC of the electrolyte in the tank.

Although not illustrated, cell stack 100 may include the monitor cell. In this case, for example, the monitor cell includes one battery cell 10. The battery cell constituting the monitor cell does not perform the charge and the discharge as described above. When cell stack 100 includes the monitor cell, monitor cell 400 in Fig. 1 can be omitted.

The first charge is charge setting the SOC of the electrolyte greater than or equal to 60% and less than or equal to 100%. A known charging condition can be applied as the first charge. For example, in the first charge, the current density is greater than or equal to 40 mA/cm² and less than or equal to 200 mA/cm², further greater than or equal to 70 mA/cm² and less than or equal to 200 mA/cm², particularly greater than or equal to 100 mA/cm² and less than or equal to 200 mA/cm².

The second charge is the charge performed at the current density greater than or equal to 250 mA/cm². Based on the SOC of the electrolyte measured by monitor cell 400, controller 6 controls power converter 7 such that the charge is performed at the current density greater than or equal to 250 mA/cm² when the SOC of the electrolyte is greater than or equal to 60% and less than or equal to 100%. Controller 6 of the example controls power converter 7 so as to alternately and repeatedly perform pulse charge and pulse discharge. Controller 6 of the example performs the control such that pulse charge is performed at the current density greater than or equal to 250 mA/cm².

The first charge and the second charge will be described in detail in an RF battery operation method described later.

### <RF battery operation method>

In the RF battery operation method, the charge and the discharge are performed by circulating the electrolyte between the tank and battery cell 10 using RF battery system 1α. One of the features of the RF battery operation method of the first embodiment is that the method includes a main process of performing the charge at the current density greater than or equal to 250 mA/cm². The RF battery operation method of the example includes a preparation process of performing the charge such that the SOC of the electrolyte is greater than or equal to 60% and less than or equal to 100%, and a main process is performed after the preparation process. The RF battery operation method of the example includes a first process and a second process that are sequentially performed, the first charge is performed in the first process, and the second charge is performed in the second process. The first process includes a preparation process. The second process includes a main process. In the example, the first process is the preparation process. In the example, the second process is a pulse process. The pulse process includes a main process and a process of performing the pulse discharge as described later. The RF battery operation method of the first embodiment can be used for manufacturing a specific electrolyte 3 (Fig. 9) described later.

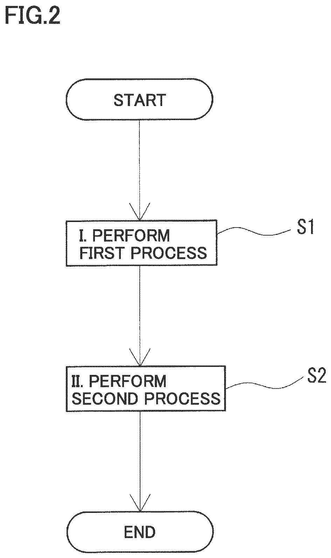

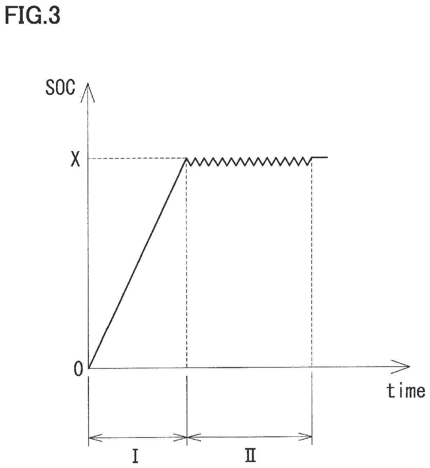

As illustrated in Fig. 2, in the RF battery operation method of the example, a first process S1 and a second process S2 are sequentially performed. Fig. 3 is an explanatory view illustrating the first process and the second process. In the graph illustrated in Fig. 3, a vertical axis represents the SOC, and a horizontal axis represents time. In Fig. 3, "I" represents the first process, and "II" represents the second process.

### [First process]

In the first process, although depending on the type of ions contained in the electrolyte, the first charge is performed until the SOC of the electrolyte becomes greater than or equal to 60% and less than or equal to 100%. For example, when the electrolyte contains the Mn ion as the active material ion, in the first charge, the charge is performed until the SOC of the electrolyte becomes greater than or equal to 60% and less than or equal to 70%. When the electrolyte contains the Ti ion in addition to the Mn ion, in the first charge, the charge is performed until the SOC of the electrolyte becomes greater than or equal to 70% and less than or equal to 100%. In the first charge, as illustrated in Fig. 3, the SOC uniformly increases with the lapse of time.

The concentration of the active material ion contained in the electrolyte is greater than or equal to 0.3 mol/L and less than or equal to 5 mol/L depending on the type of the active material ion. When a plurality of active material ions are contained, the total concentration satisfies the above concentration range. When the concentration of the active material ions is greater than or equal to 0.3 mol/L, energy density of the electrolyte can be increased. Because the energy density can be increased as the concentration of the active material ions is higher, the concentration of the active material ions may be greater than or equal to 0.5 mol/L, further greater than or equal to 0.7 mol/L, and particularly greater than or equal to 0.9 mol/L. From the viewpoint of solubility in the aqueous solution and the like, the concentration of the active material ion is less than or equal to 5 mol/L, and further less than or equal to 2 mol/L. That is, the concentration of the active material ion is further greater than or equal to 0.5 mol/L and less than or equal to 5 mol/L, furthermore greater than or equal to 0.7 mol/L and less than or equal to 5 mol/L, or greater than or equal to 0.9 mol/L and 2 mol/L. When the Mn ion is used as the active material ion, the concentration of the Mn ion is greater than or equal to 0.8 mol/L and less than or equal to 2.0 mol/L, and further greater than or equal to 1.0 mol/L and less than or equal to 1.5 mol/L. The concentration of the active material ion in the electrolyte is substantially maintained even after both the first process and the second process are performed. That is, the concentration of the active material ion is substantially the same before performing the first process and after performing the second process.

When the Mn ion is used as the active material ion, the electrolyte contains the Ti ion in addition to the Mn ion. The Ti ion has an effect of micronizing the oxide of MnO₂ precipitated during the charge. In the positive electrolyte containing the Mn ion as the active material ion, the Ti ion in the positive electrolyte does not function as the positive electrode active material. When the Ti ion is contained in addition to the Mn ion, the concentration of the Ti ion is greater than or equal to 0.8 mol/L and less than or equal to 2.0 mol/L, and further greater than or equal to 1.0 mol/L and less than or equal to 1.8 mol/L. The concentration of the Mn ion and the concentration of the Ti ion may be the same or different.

### [Second process]

The second process includes a main process of performing the second charge at the current density greater than or equal to 250 mA/cm². The SOC of the electrolyte at the start of the second process is greater than or equal to 60% and less than or equal to 100%. The second process in this example is the pulse process of alternately repeating the pulse charge and the pulse discharge. The pulse process includes the main process. In the main process, the pulse charge is performed at the current density greater than or equal to 250 mA/cm². That is, the second charge in this example is the pulse charge. The second process does not significantly change the SOC obtained by the first charge as a whole. In the second process, as illustrated in Fig. 3, a zigzag waveform in which a change width of the SOC due to the pulse charge and the pulse discharge is small is formed, but the SOC is not substantially changed as a whole. For example, in the second process, the SOC keeps a value X in Fig. 3 substantially constant.

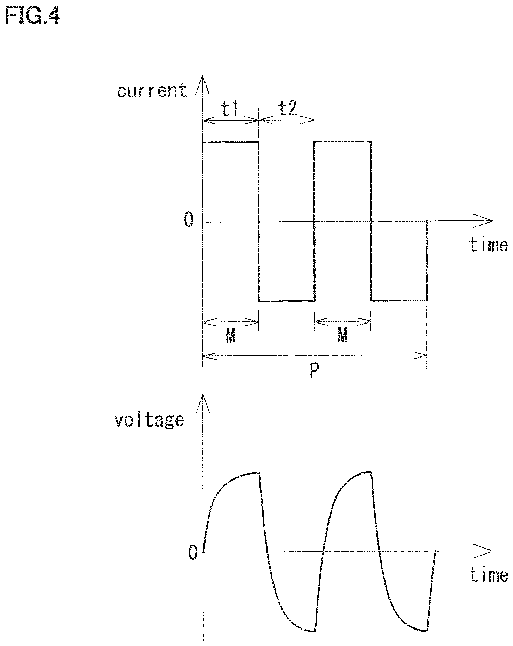

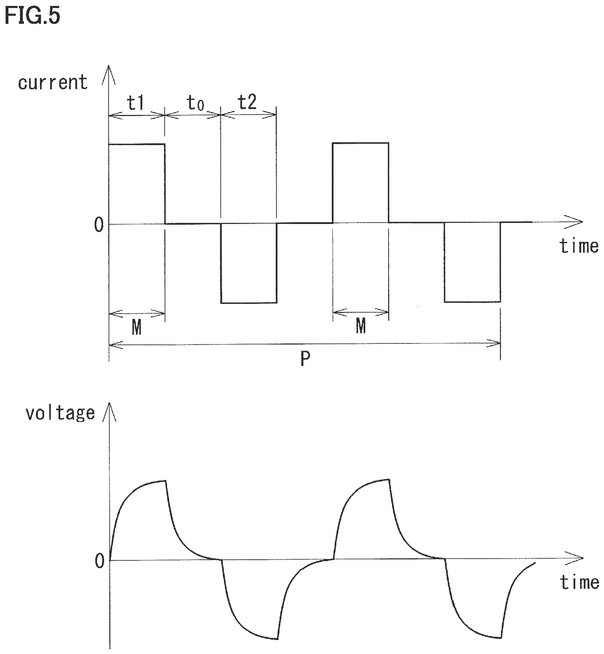

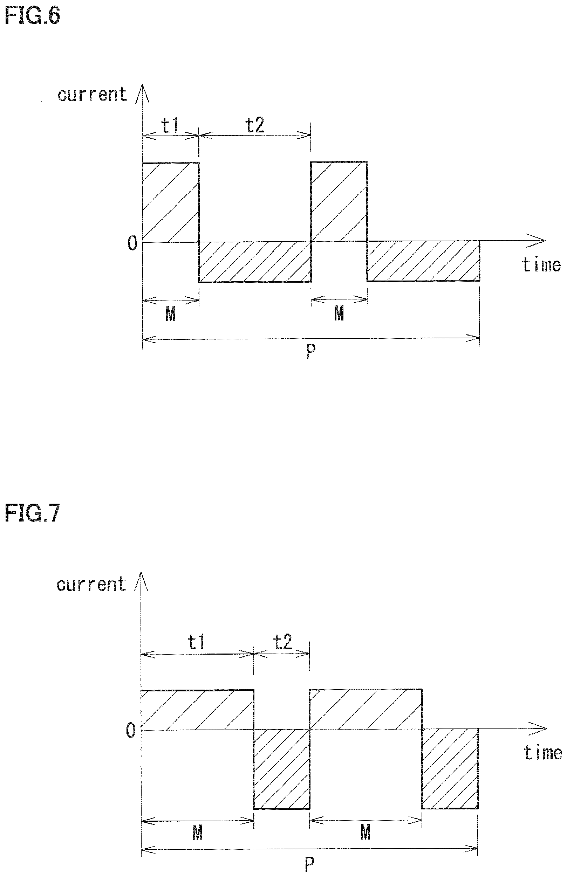

The pulse charge and the pulse discharge may be performed such that the pulse waveforms of the currents during the charge and during the discharge are symmetric like the pulse waveform of the current illustrated in the upper diagram of Fig. 4. In the upper view of Fig. 4, the upper view of Fig. 5 described later, and graphs in Figs. 6 and 7, the vertical axis represents the current value, and the horizontal axis represents the time. In each of the above graphs, the charge is indicated above zero on the vertical axis, and the discharge is indicated below zero on the vertical axis. In each of the above graphs, "P" represents the pulse process, and "M" represents the main process. In each of the above graphs, for convenience of description, an example in which the pulse charge and the pulse discharge are alternately repeated twice is illustrated. The pulse process in this example includes two main processes. The lower view of Fig. 4 and the lower view of Fig. 5 described later are pulse waveforms of voltages corresponding to the pulse waveforms of the currents in the upper views of the respective drawings. In the graphs illustrated in the lower view of Fig. 4 and the lower view of Fig. 5, the vertical axis represents the voltage value and the horizontal axis represents the time.

The current density of the pulse charge performed in each main process is the above-described current density greater than or equal to 250 mA/cm². In other words, the current density of the charge per cycle in the pulse waveform is the above-described current density greater than or equal to 250 mA/cm². One cycle in the pulse waveform is a unit of the pulse waveform of the current indicated by the charge of one pulse and the discharge of one pulse. That is, the fact that the pulse waveforms of the current during the charge and the current during the discharge are symmetric means that the waveform of the current of one pulse during the charge and the waveform of the current of one pulse during the discharge are symmetric. The pulse charge of this example has higher output than general constant current charge. When the current density is greater than or equal to 250 mA/cm², specific electrolyte 3 (Fig. 9) described later is obtained. Specifically, electrolyte 3 includes a dispersoid and a dispersion medium 31 suspending the dispersoid, and a plurality of specific particles 30 are suspended in dispersion medium 31 as the dispersoid. Each particle 30 is a precipitate composed of an oxide generated from the active material ion. Each particle 30 is likely to stably exist in electrolyte 3.

The current density mainly affects the precipitation amount of each particle 30. The higher the current density, the more easily the precipitation amount of particles 30 increases. On the other hand, the lower the current density, the more easily the precipitation amount of particles 30 is reduced. Accordingly, preferably the current density is high in order to increase the precipitation amount of each particle 30. Consequently, the current density is further greater than or equal to 270 mA/cm², greater than or equal to 280 mA/cm², greater than or equal to 300 mA/cm², greater than or equal to 400 mA/cm², or greater than or equal to 500 mA/cm². However, when the current density is too high, precipitated particles 30 are likely to become coarse. Coarsened particles 30 are less likely to float in dispersion medium 31 and are likely to settle down by gravity. Accordingly, the current density is preferably low to some extent. Consequently, the current density is less than or equal to 1000 mA/cm², further less than or equal to 800 mA/cm², or particularly less than or equal to 600 mA/cm². The current density is greater than or equal to 250 mA/cm² and less than or equal to 1000 mA/cm², greater than or equal to 300 mA/cm² and less than or equal to 800 mA/cm², greater than or equal to 400 mA/cm² and less than or equal to 700 mA/cm², or greater than or equal to 500 mA/cm² and less than or equal to 600 mA/cm².

A charge time t1 (Fig. 4) per cycle in the pulse charge performed in each main process is greater than or equal to 1 second and less than or equal to 10 minutes. Charge time t1 per cycle in the pulse charge is a time of the charge of one pulse among units of the pulse waveform of the current indicated by the charge of one pulse and the discharge of one pulse. When charge time t1 is greater than or equal to 1 second, specific electrolyte 3 (Fig. 9) is easily obtained. Charge time t1 affects a size of each precipitated particle 30 (Fig. 9). As charge time t1 is longer, each precipitated particle 30 tends to become coarse. As charge time t1 is shorter, each precipitated particle 30 tends to become finer. When charge time t1 is less than or equal to 10 minutes, coarsening of each particle 30 can be prevented. Charge time t1 is further set greater than or equal to 1 second and less than or equal to 300 seconds, particularly greater than or equal to 5 seconds and less than or equal to 100 seconds.

Similarly to charge time 11, a discharge time t2 (Fig. 4) per cycle in the pulse discharge is also greater than or equal to 1 second and less than or equal to 10 minutes, further greater than or equal to 1 second and less than or equal to 300 seconds, and particularly greater than or equal to 5 seconds and less than or equal to 100 seconds.

In the pulse charge and the pulse discharge, a standby time t0 may be provided between the charge and the discharge in one cycle similarly to the pulse waveform of the current illustrated in the upper view of Fig. 5. The pulse process in this example includes two main processes. Standby time t0 is set greater than or equal to 0 seconds and less than or equal to 60 seconds.

In addition, the pulse charge and the pulse discharge may be performed such that the pulse waveforms of the currents during the charge and during the discharge are asymmetric. For example, the pulse charge and the pulse discharge include alternately repeating high-output charge and low-output discharge as in the pulse waveform of the current in Fig. 6. The pulse process in this example includes two main processes. In the case where the SOC is low, for example, in the case where value X in Fig. 3 is less than 60%, when the plurality of particles 30 are precipitated, the current density of the charge per cycle is increased, and the charge is performed at a high current value. When the discharge is performed in accordance with this high current value, there is a risk that the plurality of particles 30 precipitated during the charge is melted at the low SOC. Accordingly, when the SOC is low, the charge is performed at the high current value, and the discharge is performed at the low current value. At this point, in the pulse waveform, the area represented by a product of the current value during the charge in one cycle and the charge time is the same as the area represented by a product of the current value during the discharge in one cycle and the discharge time. Consequently, the charge and the discharge in one cycle include the charge at high output and in a short time, and the discharge at low output and for a long time.

In addition, the pulse charge and the pulse discharge include alternately repeating the low-output charge and the high-output discharge as in the pulse waveform of the current in Fig. 7. The pulse process in this example includes two main processes. In the case where the SOC is high, for example, in the case where value X in Fig. 3 is greater than or equal to 60%, there is a risk that battery cell 10 (Fig. 1) is damaged when the current density of the charge per cycle is increased while the charge is performed at the high current value. Accordingly, when the SOC is high, the current density of the charge per cycle is lowered, and the charge is performed at the low current value. On the other hand, in the high SOC, when the battery is discharged at the high current density, it can be expected that the plurality of particles 30 are peeled off from the electrode when the plurality of particles 30 precipitated during the charge adhere to the electrode. At this point, in the pulse waveform, the area represented by a product of the current value during the charge in one cycle and the charge time is the same as the area represented by a product of the current value during the discharge in one cycle and the discharge time. Consequently, the charge and the discharge in one cycle include the charge at the low output for the long time and the discharge at the high output for the short time.

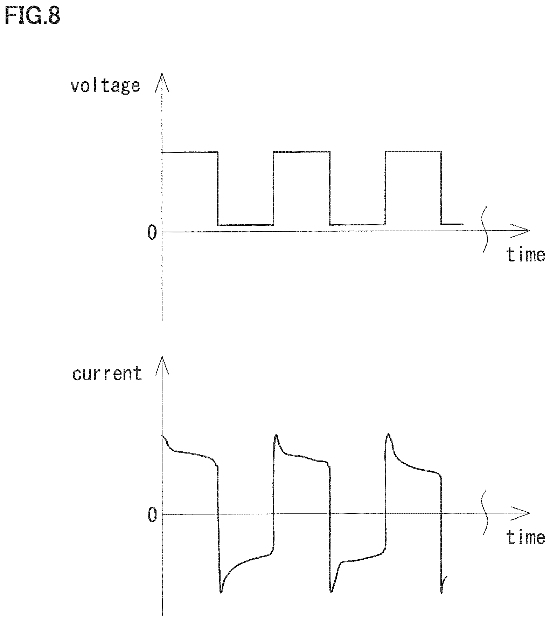

The pulse charge and the pulse discharge can also be the charge and the discharge by chronoamperometric chronopotentiometry that performs the control by the voltage and the time or electric quantity as in the pulse waveform of the voltage illustrated in the upper view of Fig. 8, instead of the control by the current value and the time as described above. In the graph illustrated in the upper view of Fig. 8, the vertical axis represents the voltage value, and the horizontal axis represents time. The lower view in Fig. 8 is the pulse waveform of the current corresponding to the pulse waveform of the voltage of the upper view in Fig. 8. In the graph illustrated in the lower view of Fig. 8, the vertical axis represents the current value, and the horizontal axis represents time.

The pulse process is performed for greater than or equal to 0.5 hours and less than or equal to 24 hours. The time of the pulse process is the total time from the start to the end of the pulse process. For example, when the pulse charge and the pulse discharge of a plurality of cycles are repeated, the time of the pulse process is the total time of all cycles. By performing the pulse process for greater than or equal to 0.5 hours, specific electrolyte 3 (Fig. 9) is easily obtained. The time of the pulse process affects the size of each precipitated particle 30. As the time of the pulse process is longer, each precipitated particle 30 tends to become coarse. On the other hand, as the time of the pulse process is shorter, each precipitated particle 30 tends to become finer. When the time of the pulse process is less than or equal to 24 hours, coarsening of each particle 30 can be prevented. The time of the pulse process is further greater than or equal to 1 hour and less than or equal to 12 hours, and particularly greater than or equal to 2 hours and less than or equal to 6 hours.

In the second process, when one main process is performed without including the pulse process, the time of this one main process is greater than or equal to 0.5 hours and less than or equal to 24 hours, further greater than or equal to 1 hour and less than or equal to 12 hours, particularly greater than or equal to 2 hours and less than or equal to 6 hours.

Examples of the RF battery operation method described above include performing at an initial stage before operating RF battery 1 (Fig. 1). By performing the operation at the initial stage before operating RF battery 1, RF battery 1 can be operated using specific electrolyte 3 (Fig. 9). In specific electrolyte 3, as described later, precipitated particle 30 exists stably. Specific electrolyte 3 has the high energy density. Accordingly, RF battery 1 having the high energy density can be constructed by operating RF battery 1 using specific electrolyte 3.

For example, the above-described RF battery operation method can also be performed during maintenance of RF battery 1. For example, the maintenance is performed when a considerable period elapses from the start of the operation of RF battery 1. The considerable period is at least three days after the operation of RF battery 1 is started. When RF battery 1 is operated using specific electrolyte 3, the plurality of particles 30 ca adhere to the electrode. Accordingly, it can be expected that the plurality of particles 30 attached to the electrode is peeled off by performing the second process that is the pulse process described above during the maintenance of RF battery 1. It is considered that the plurality of particles 30 attached to the electrode is mainly peeled off by the pulse discharge in the second process. The plurality of particles 30 attached to the electrode are hardly peeled off by the normal discharge during the operation of RF battery 1. When the second process is performed during the maintenance, the plurality of particles 30 are newly precipitated. Each particle 30 precipitated during the maintenance also exist stably in electrolyte 3.

### <Electrolyte>

As illustrated in Fig. 9, electrolyte 3 obtained by the above-described RF battery operation method includes the dispersoid and dispersion medium 31 suspending the dispersoid. Dispersion medium 31 is the aqueous solution containing the active material ion. Fig. 9 is an enlarged view illustrating electrolyte 3 surrounded by a broken line circle illustrated in positive electrolyte tank 22 of Fig. 1. In electrolyte 3, a plurality of specific particles 30 are suspended in dispersion medium 31 as the dispersoid.

Each particle 30 is made of the oxide containing an element that becomes the active material ion and oxygen. Each particle 30 is generated by increasing the concentration of the active material ion contained in dispersion medium 31. Each particle 30 is a precipitate generated from the active material ion. For example, when the electrolyte contains the Mn ion as the active material ion, each particle 30 is the Mn oxide (MnO₂) precipitated from the Mn ion.

Each particle 30 exists in suspension in dispersion medium 31 under a specific condition. In other words, each particle 30 hardly settles by gravity under the specific condition. Each floatable particle 30 can exist stably in electrolyte 3. Each particle 30 is floating, so that degradation of the flow of electrolyte 3 can be prevented even when the plurality of particles 30 are contained. In other words, the plurality of particles 30 hardly inhibit the flow of electrolyte 3. Accordingly, electrolyte 3 has excellent flowability. It can be visually checked that each particle 30 is floating.

The specific condition is immediately after electrolyte 3 is left to stand for 1 hour. At this point, "immediately after" means a short time within 3 minutes after the lapse of one hour. The state in which each particle 30 is floating in dispersion medium 31 can be maintained even immediately after electrolyte 3 is left to stand for 3 hours, further 5 hours, 8 hours, particularly 1 day.

A sedimentation rate of each particle 30 in dispersion medium 31 is less than 1 mm per hour under the above specific condition, namely, less than 1 mm/hour. When the sedimentation rate is less than 1 mm/hour, each particle 30 is likely to float and exist in dispersion medium 31 under the specific condition. The sedimentation rate is obtained by a Stokes equation. The Stokes equation is v = {Dₚ²(ρₚ - ρ_{f})g}/18η. Each symbol in the formula is as follows. The symbol v is the sedimentation rate. Symbol Dₚ represents the particle diameter of particle 30. Symbol ρₚ is density of particles 30. Symbol ρ_{f} represents the density of dispersion medium 31. The symbol g represents gravitational acceleration. Symbol η represents viscosity of dispersion medium 31. The particle size of particle 30 mainly depends on charge and discharge conditions. The density of particles 30 depends mainly on the composition of particles 30. The density of dispersion medium 31 and the viscosity of dispersion medium 31 mainly depend on the liquid composition of the electrolyte. The particle diameter of particles 30, the density of particles 30, the density of dispersion medium 31, and the viscosity of dispersion medium 31 can be measured using a known device.

In the plurality of particles 30, a volume ratio of the particle diameter greater than or equal to 1000 nm is less than or equal to 20%. When the particle size increases, particle 30 is less likely to float in dispersion medium 31 and easily settles by gravity. Consequently, when the volume ratio of coarse particles having the particle diameter greater than or equal to 1000 nm is less than or equal to 20%, the plurality of particles 30 is likely to float in dispersion medium 31. The volume ratio of the coarse particles is further less than or equal to 15%, less than or equal to 10%, and particularly less than or equal to 5%. The volume ratio of the coarse particles is determined from the scattering intensity obtained by the particle size measurement by a dynamic light scattering method. Examples of a particle size measuring device used in the dynamic light scattering method include Zeta Nanosizer manufactured by Malvern Panalytical Ltd. When the coarse particles are contained in the range less than or equal to 20% by volume, the average sedimentation rate of entire particles 30 may be less than 1 mm/hour. When the average sedimentation rate is less than 1 mm/hour, the plurality of particles 30 easily float in dispersion medium 31.

In the plurality of particles 30, a volume ratio of the particle diameter greater than or equal to 800 nm is less than or equal to 30%. When the volume ratio of the particles having the particle diameter greater than or equal to 800 nm is less than or equal to 30%, the plurality of particles 30 is more likely to float in dispersion medium 31. The volume ratio of the particles having the particle diameter greater than or equal to 800 nm is further less than or equal to 20%, less than or equal to 15%, and particularly less than or equal to 10%.

The plurality of particles 30 may have an average particle size less than or equal to 600 nm. When the average particle diameter of the plurality of particles 30 is less than or equal to 600 nm, the plurality of particles 30 easily float in dispersion medium 31. In addition, because the average particle diameter of the plurality of particles 30 is less than or equal to 600 nm, it is easy to maintain the state in which the plurality of particles 30 are suspended in dispersion medium 31. The finer each particle 30 is, the easier it is to float in dispersion medium 31, and the easier it is to maintain the state of floating in dispersion medium 31. The average particle size of the plurality of particles 30 is further less than or equal to 300 nm, less than or equal to 200 nm, less than or equal to 100 nm, or less than or equal to 80 nm. The average particle size of the plurality of particles 30 is determined from the average particle size of a population using the dynamic light scattering method. The population is an aggregate of all particles 30.

The plurality of particles 30 preferably have the average particle size greater than 1 nm. When particles 30 are too fine, excessively fine particles 30 are likely to aggregate. When particles 30 are aggregated with each other, the particles grow into coarse particles and easily settle. When the average particle size of the plurality of particles 30 is greater than 1 nm, the aggregation of particles 30 can be prevented. The average particle size of the plurality of particles 30 is further greater than or equal to 10 nm, particularly greater than or equal to 20 nm.

The plurality of particles 30 may have the average particle size greater than 1 nm and less than or equal to 600 nm, further greater than or equal to 10 nm and less than or equal to 300 nm, particularly greater than or equal to 20 nm and less than or equal to 100 nm.

The plurality of particles 30 are dispersed in dispersion medium 31. The state in which the plurality of particles 30 are dispersed in dispersion medium 31 refers to the state in which the plurality of particles 30 exist uniformly in dispersion medium 31 without being aggregated. For example, adjacent particles 30 are floating with a certain distance therebetween. In other words, adjacent particles 30 are floating apart from each other. The state in which the plurality of particles 30 are dispersed in dispersion medium 31 is maintained over time. For example, the plurality of particles 30 are dispersed in dispersion medium 31 under the specific condition. The state in which the plurality of particles 30 are dispersed in dispersion medium 31 is maintained even immediately after electrolyte 3 is left to stand for 3 hours, further 5 hours, 8 hours, particularly 1 day. The dispersion state of the plurality of particles 30 in dispersion medium 31 can be grasped by the dynamic light scattering method.

The number of particles 30 contained per unit volume of dispersion medium 31, namely, the number density of particles 30 is greater than or equal to 10¹⁰ particles/cm³ and less than or equal to 10²² particles/cm³. The larger the number of particles 30, the higher the concentration of the active material ion in dispersion medium 31. The fact that the number density of particles 30 is greater than or equal to 10¹⁰ particles/cm³ means that many particles 30 exist in dispersion medium 31. Consequently, when the number density of particles 30 is greater than or equal to 10¹⁰ particles/cm³, improvement of the energy density can be expected. On the other hand, when the number density of particles 30 is less than or equal to 10²² particles/cm³, the average particle size of the plurality of particles 30 tends to be greater than 1 nm. Since the average particle size of the plurality of particles 30 is greater than 1 nm, it is easy to prevent excessively fine particles 30 from aggregating and settling. Consequently, when the number density of particles 30 is less than or equal to 10²² particles/cm³, each particle 30 can exist stably in electrolyte 3, so that the improvement of the energy density can be expected. The number density of particles 30 is further greater than or equal to 10¹³ particles/cm³ and less than or equal to 10²⁰ particles/cm³, particularly greater than or equal to 10¹⁵ particles/cm³ and less than or equal to 10¹⁷ particles/cm³. The number density of particles 30 is obtained by a calculation formula represented by A × B / (C × D). The symbols in the calculation formula are as follows. Symbol A is the concentration of active material ions. Symbol B is the molecular weight of each particle 30. Symbol C is the density of each particle 30. Symbol D is 4/3 × π × r³. The symbol r is 1/2 of the average particle size of the plurality of particles 30. For example, the concentration of the active material ions is determined from a charge electricity quantity and the measured potential using the Nernst equation. The concentration of the active material ion can also be determined by performing the concentration measurement using centrifugation or the like.

Each particle 30 may change in size by the charge and the discharge of RF battery 1. Specifically, each particle 30 becomes large when RF battery 1 is charged, and becomes small when RF battery 1 is discharged. The change in size of each particle 30 is based on a change in a valence of the active material ion in dispersion medium 31. For example, the average particle size of each particle 30 is changed by the charge and the discharge of RF battery 1. A change width of the average particle diameter is greater than or equal to 1 nm and less than 600 nm. The change width of the average particle diameter is a difference between the average particle diameter of the plurality of particles 30 during the full charge and the average particle diameter of the plurality of particles 30 during the discharge. In this case, the fully charged state is the case where the SOC is 100%, and the discharged state is the case where the SOC is 30%. The aggregation and the sedimentation of the oxide that is newly generated during the charge can be prevented when the change width of the average particle size is greater than or equal to 1 nm. On the other hand, when the change width of the average particle diameter is less than 600 nm, the coarsening of each particle 30 can be easily prevented. The change width of the average particle size is further greater than or equal to 2 nm and less than or equal to 300 nm, greater than or equal to 2 nm and less than or equal to 200 nm, and particularly greater than or equal to 5 nm and less than or equal to 100 nm.

### <<Second embodiment>>

With reference to Fig. 10, an RF battery operation method according to a second embodiment will be described. In the RF battery operation method of the second embodiment, as the second process, the pulse process is performed a plurality of times and a sub-process is performed between the plurality of pulse processes. The RF battery operation method of the second embodiment is different from that of the first embodiment in the second process. The first process in the RF battery operation method of the second embodiment is the same as that of the first embodiment. In the graph of Fig. 10, similarly to the graph of Fig. 3, the vertical axis represents the SOC and the horizontal axis represents the time. In Fig. 10, "P" represents the pulse process, and "S" represents the sub-process.

### [Pulse process]

The pulse process is performed a plurality of times. In this example, the pulse process is performed three times. The pulse process is a process of alternately and repeatedly performing the pulse charge and the pulse discharge described in the first embodiment. Each pulse process includes a main process and a process performing the pulse discharge. In the main process, as described in the first embodiment, the pulse charge is performed at the current density greater than or equal to 250 mA/cm². In each pulse process, the order of the pulse charge and the pulse discharge is not limited. In each pulse process, as illustrated in Fig. 10, the change width of the SOC due to the pulse charge and the pulse discharge is small, and the SOC is not changed generally as a whole. For example, in each pulse process, the SOC keeps value X in Fig. 10 substantially constant.

Each pulse process is performed for greater than or equal to 1 hour and less than or equal to 10 hours. The time of each pulse process is the total time from the start to the end of one pulse process. When each pulse process is performed for greater than or equal to 1 hour, specific electrolyte 3 (Fig. 9) is easily obtained. On the other hand, when each pulse process is performed for less than or equal to 10 hours, it is easy to control the size of each particle 30. The time of each pulse process is further greater than or equal to 2 hours and less than or equal to 8 hours, and particularly greater than or equal to 3 hours and less than or equal to 6 hours.

The number of pulse processes is greater than or equal to 2 and less than or equal to 10. When the number of pulse processes is set greater than or equal to 2, it is easy to control the size of each particle 30. On the other hand, when the number of pulse processes is set less than or equal to 10, complication of the second process can be prevented. The number of times of the pulse process is further greater than or equal to 2 and less than or equal to 8, and particularly greater than or equal to 3 and less than or equal to 6.

The total time of the plurality of pulse processes is greater than or equal to 1 hour and less than or equal to 100 hours. When the total time of the plurality of pulse processes is greater than or equal to 1 hour, specific electrolyte 3 (Fig. 9) is easily obtained. On the other hand, when the total time of the plurality of pulse processes is less than or equal to 100 hours, the coarsening of each particle 30 can be prevented. The total time of the plurality of pulse processes is further greater than or equal to 3 hours and less than or equal to 50 hours, and particularly greater than or equal to 10 hours and less than or equal to 30 hours.

The time of each pulse process, the number of pulse processes, and the total time of the plurality of pulse processes can be appropriately selected.

### [Sub-process]

The sub-process is performed between the plurality of pulse processes. In this example, the sub-process is performed twice. In the sub-process, the discharge and the charge are sequentially performed once. In the discharge in the sub-process, as illustrated in Fig. 10, the SOC is temporarily lowered with respect to the SOC in the pulse process immediately before the sub-process. In the charge in the sub-process, the once lowered SOC is increased. For example, in the sub-process, the SOC is once lowered from value X in Fig. 10 to a value Y, and returned to value X again. The change amount of the SOC by the sub-process is larger than the change amount of the SOC by each pulse process. The change amount of the SOC in the sub-process is a difference between the SOC in the pulse process and the SOC during the discharge in the sub-process. For example, it is a difference X-Y between value X and value Y in Fig. 10. The difference is greater than or equal to 20%, further greater than or equal to 30%, particularly greater than or equal to 40%. The SOC in each pulse process is an average value of the largest SOC and the smallest SOC in a plurality of times of the pulse charge and the pulse discharge. The change amount of the SOC by each pulse process is a difference between the largest SOC and the smallest SOC in the plurality of times of the pulse charge and the pulse discharge. The SOC in each pulse process is not substantially changed as a whole. Consequently, it is considered that the change amount of the SOC by each pulse process is very small. For example, the change amount of the SOC by each pulse process is greater than or equal to 1% and less than or equal to 10%.

The sub-process is performed such that the SOC at the start of the discharge and the SOC at the end of the charge are substantially the same. The discharge time in the sub-process is larger than discharge time t2 (Fig. 4) per cycle of the pulse charge and the pulse discharge in the pulse process. In addition, the charge time in the sub-process is longer than charge time t1 (Fig. 4) per cycle of the pulse charge and the pulse discharge in the pulse process. The discharge time per cycle in the sub-process is greater than or equal to 10 seconds and less than or equal to 10 minutes, further greater than or equal to 20 seconds and less than or equal to 5 minutes, and particularly greater than or equal to 1 minute and less than or equal to 3 minutes. The charging time per cycle in the sub-process is greater than or equal to 10 seconds and less than or equal to 10 minutes. The discharge time and the charge time per cycle in the sub-process may be the same or different. The discharge and that charge in the sub-process may be constant current discharge and constant current charge.

In the second process, when one pulse is performed to lengthen the time of the one pulse process, each generated particle 30 (Fig. 9) tends to be coarse. A plurality of pulse processes are performed, the time of each pulse process is shortened, and the pulse process and the sub-process are repeatedly performed, so that the size of each particle 30 can be easily controlled. In the single pulse process, particles 30 of some size can be produced. When particles 30 having a certain size are generated, the SOC is once lowered in the sub-process to make particles 30 fine. Thereafter, the SOC is increased in the sub-process, and the pulse process is performed again, so that particles 30 micronized in the sub-process can be enlarged. Each particle 30 can have a desired size by repeating the coarsening and refinement of each particle 30.

### <<Third embodiment>>

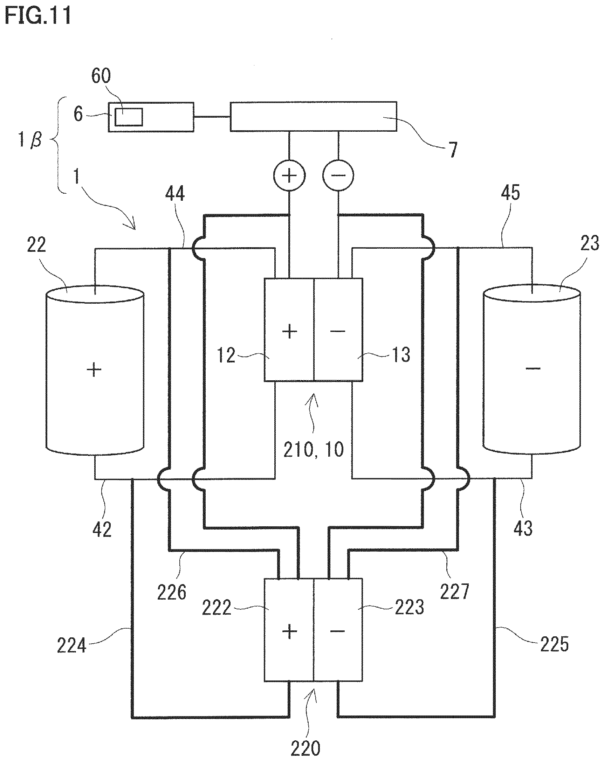

With reference to Fig. 11, an RF battery system 1β according to a third embodiment and a RF battery operation method using RF battery system 1β will be described. RF battery system 1β of the third embodiment includes a second battery cell 220 provided separately from battery cell 10 (Fig. 1). In the third embodiment, battery cell 10 is referred to as a first battery cell 210 for easy understanding. RF battery system 1β of the third embodiment is different from the first embodiment in including a second battery cell 220. RF battery system 1β of the third embodiment is different from that of the first embodiment in that controller 6 performs the control such that first battery cell 210 performs the first charge and second battery cell 220 performs the second charge.

For easy understanding, Fig. 11 illustrates a mode in which each of first battery cell 210 and second battery cell 220 is constituted by one battery cell. In Fig. 11, first battery cell 210, second battery cell 220, and pipes 42 to 45 and 224 to 227 are illustrated in a simplified manner for easy understanding. In Fig. 11, pumps 46, 47 (Fig. 1) are omitted. In Fig. 11, monitor cell 400 (Fig. 1) is omitted. In Fig. 11, the positive electrode side is indicated by +, and the negative electrode side is indicated by

Second battery cell 220 includes a positive electrode cell 222 and a negative electrode cell 223. A membrane (not illustrated) is interposed between positive electrode cell 222 and negative electrode cell 223. Second battery cell 220 has the same configuration as first battery cell 210. That is, second battery cell 220 has the same configuration as battery cell 10 described in the first embodiment. Similarly to first battery cell 210, second battery cell 220 is connected to positive electrolyte tank 22 and negative electrolyte tank 23. Specifically, positive electrode cell 222 is connected to positive electrolyte tank 22 through supply pipe 224 and return pipe 226. Negative electrode cell 223 is connected to negative electrolyte tank 23 through a supply pipe 225 and a return pipe 227.

The positive electrolyte is supplied from positive electrolyte tank 22 to the positive electrode (not illustrated) in positive electrode cell 222 through supply pipe 224, and is returned from the positive electrode to positive electrolyte tank 22 through return pipe 226. The negative electrolyte is supplied from negative electrolyte tank 23 to the negative electrode (not illustrated) in negative electrode cell 223 through supply pipe 225, and is returned from the negative electrode to negative electrolyte tank 23 through return pipe 227. In second battery cell 220, the positive electrolyte is circulated to the positive electrode (not illustrated), and the negative electrolyte is circulated to the negative electrode (not illustrated), so that the charge and the discharge are performed along with a valence change reaction of the active material ion in each electrolyte.

Second battery cell 220 is electrically connected between first battery cell 210 and power converter 7. Power converter 7 charges and discharges second battery cell 220 based on an instruction from controller 6.

Controller 6 performs the control to sequentially perform the first charge and the second charge, and performs the control to switch a target of the charge and the discharge from first battery cell 210 to second battery cell 220. Specifically, controller 6 controls first battery cell 210 to perform the first charge, and then controls second battery cell 220 to perform the second charge. When the pulse charge is performed as the second charge as described in the first embodiment and the second embodiment, controller 6 controls second battery cell 220 to perform the pulse charge and the pulse discharge.

In the RF battery operation method of the third embodiment, the first charge is performed by first battery cell 210 and the second charge is performed by second battery cell 220 using above-described RF battery system 1β. When the pulse charge is performed as the second charge as described in the first embodiment and the second embodiment, the pulse charge and the pulse discharge are performed by second battery cell 220. The second process described in the first embodiment or the second embodiment is performed using second battery cell 220.

First battery cell 210 is typically utilized for the operation of RF battery 1 with the charge at the current density less than 250 mA/cm². The second charge is the charge performed at the current density greater than or equal to 250 mA/cm². Accordingly, when the second charge, particularly the second charge is the pulse charge, there is a fear that first battery cell 210 is damaged. So, the damage to first battery cell 210 can be prevented using second battery cell 220 different from first battery cell 210. Second battery cell 220 is mainly used only for the pulse charge and the pulse discharge including the charge at the current density greater than or equal to 250 mA/cm². For this reason, second battery cell 220 is used less frequently.

When first battery cell 210 and second battery cell 220 are provided, in the state where the charge and the discharge are performed in first battery cell 210 while the charge and the discharge are not performed in second battery cell 220, second battery cell 220 can be used as the monitor cell grasping the SOC of the electrolyte circulated in first battery cell 210. That is, second battery cell 220 can be used as monitor cell 400 in Fig. 1. In the state in which the charge and the discharge are performed in second battery cell 220 while the charge and the discharge are not performed in first battery cell 210, first battery cell 210 can be used as the monitor cell grasping the SOC of the electrolyte circulated in second battery cell 220.

### <<Fourth embodiment>>

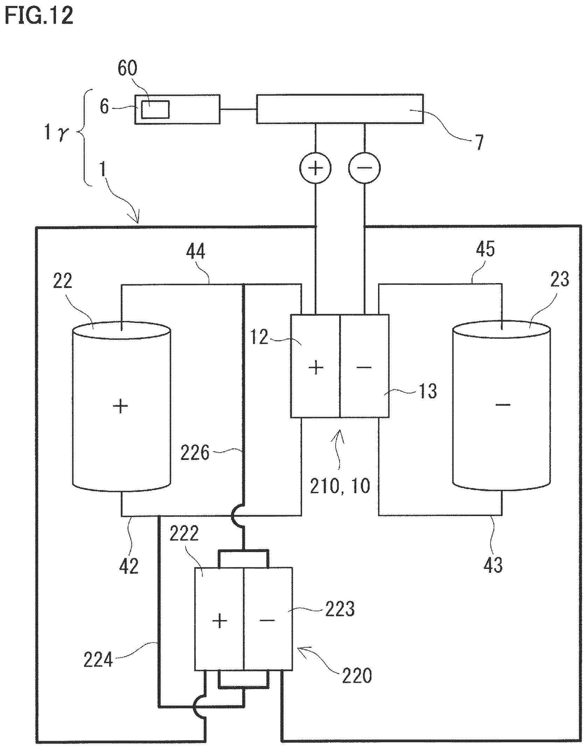

With reference to Fig. 12, an RF battery system 1γ according to a fourth embodiment and an RF battery operation method using RF battery system 1γ will be described. RF battery system 1γ of the fourth embodiment is different from the third embodiment in that second battery cell 220 is connected to only one of positive electrolyte tank 22 and negative electrolyte tank 23. Accordingly, in the RF battery operation method of the fourth embodiment, the second charge is performed by circulating the positive electrolyte or the negative electrolyte in second battery cell 220.

In second battery cell 220 of the fourth embodiment, both positive electrode cell 222 and negative electrode cell 223 are connected to positive electrolyte tank 22 or negative electrolyte tank 23. In this example, both positive electrode cell 222 and negative electrode cell 223 are connected to positive electrolyte tank 22. The positive electrolyte is supplied from positive electrolyte tank 22 to the positive electrode (not illustrated) in positive electrode cell 222 through supply pipe 224, and is also supplied to the negative electrode (not illustrated) in negative electrode cell 223. Then, the positive electrolyte is returned from both the positive electrode and the negative electrode to positive electrolyte tank 22 through return pipe 226.

In the fourth embodiment, the electrolyte containing the ion functioning as the positive electrode active material and the ion functioning as the negative electrode active material can be used as the positive electrolyte and the negative electrolyte. For example, the electrolyte containing the Mn ion and the Ti ion can be cited. Other examples include the electrolyte containing the V ion.

In the fourth embodiment, in second battery cell 220, the electrolyte in positive electrode cell 222 and the electrolyte in negative electrode cell 223 are the same. Accordingly, as compared with the case where the positive electrolyte is circulated from positive electrolyte tank 22 to positive electrode cell 222 and the negative electrolyte is circulated from negative electrolyte tank 23 to the negative electrode cell, a larger amount of the electrolyte of one of the positive electrolyte and the negative electrolyte can be circulated to second battery cell 220. The plurality of particles 30 are preferably suspended in the positive electrolyte. It does not matter whether the plurality of particles 30 are floating in the negative electrolyte. Accordingly, according to the fourth embodiment, when only the positive electrolyte is circulated in second battery cell 220, it is easy to quickly generate the plurality of particles 30 (Fig. 9) in the positive electrolyte by the second charge.

### [Test example 1]

In Test example 1, the particle size and floating state of the particle generated in the positive electrolyte were examined assuming the actually operating RF battery. In this example, the battery cell having the single cell structure including one positive electrode cell and one negative electrode cell was used.

### <Test body>

Each test body was prepared by circulating the positive electrolyte between the positive electrolyte tank and the positive electrode cell, circulating the negative electrolyte between the negative electrolyte tank and the negative electrode cell, and performing the first process and the second process in Figs. 2 and 4 in the RF battery.

In each test body, the composition of the positive electrolyte and the composition of the negative electrolyte were the same.

Each of the positive electrolyte and the negative electrolyte contains the Mn ion having the concentration of 1 mol/L, the Ti ion having the concentration of 1 mol/L, and sulfuric acid having the concentration of 5 mol/L.

The first process and the second process were performed using the same battery cell.

In the first process, the first charge was performed at the current density of 70 mA/cm² until the SOC of the electrolyte became 70%.

In the second process, one pulse process was performed after the first process. In the pulse process, as illustrated in Fig. 4, the pulse charge and the pulse discharge were alternately repeated symmetrically. In the pulse process, the current density of the charge per cycle was set to the current density in Table 1. A test body 11 has the current density of 0 mA/cm² and is not subjected to the pulse process. A test body 12 has the current density of 100 mA/cm². A test body 13 has the current density of 250 mA/cm². A test body 14 has the current density of 500 mA/cm². In all the test bodies, the charging time of the pulse charge was set to 8 seconds. The charge time of the pulse charge is time t1 (Fig. 4) of the charge of one pulse among units of the pulse waveform of the current indicated by the charge of one pulse and the discharge of one pulse.

The average particle diameter of the plurality of particles contained in the electrolyte of each obtained test body was measured by the dynamic light scattering method. In addition, the energy density of the electrolyte of each obtained test body was measured. The energy density was determined by performing constant current charge and discharge at the current density of 200 mA/cm² between 1.0 V and 1.6 V, and calculating from the total discharge energy and the amount of the electrolyte. The average particle size and the energy density were measured immediately before starting the pulse process and 2 hours and 4 hours after starting the pulse process. The pulse process is not performed immediately before the pulse process is started. The results are illustrated in Table 1. In Table 1, the time immediately before starting the pulse process is denoted as 0 h, the time two hours after starting the pulse process is denoted as 2 h, and the time four hours after starting the pulse process is denoted as 4 h. In Table 1, regarding the average particle size, a value immediately before the start of the pulse process in test body 11 is set as an initial value 1, and the initial value 1 is illustrated as a ratio to initial value 1. In Table 1, regarding the energy density, a value after 2 hours from the start of the pulse process in test body 11 is set as a reference value 100%, and is illustrated as a relative value with respect to this reference value. Each numerical value in Table 1 includes a rounded approximate value. In test body 13 and test body 14, the plurality of particles in the electrolyte after 2 hours and 4 hours from the start of the pulse process had an average particle size less than or equal to 600 nm. In test body 13 and test body 14, the sedimentation rate of each particle in the electrolyte after 2 hours and 4 hours from the start of the pulse process was less than 1 mm/hour.

**[Table 1]**

| Test body | Current density (mA/cm²) | 0 h | | 2h | | 4h | |
|---|---|---|---|---|---|---|---|
| | | Average particle diameter | Energy density (%) | Average particle diameter | Energy density (%) | Average particle diameter | Energy density (%) |
| 11 | 0 | 1 | 100 | 1 | 100 | 1 | 100 |
| 12 | 100 | 1 | 100 | 1 | 100 | 1 | 100 |
| 13 | 250 | 1 | 100 | 10 | 133 | 20 | 167 |
| 14 | 500 | 1 | 100 | 20 | 167 | 30 | 167 |

As illustrated in Table 1, it is found that the plurality of particles are generated when the pulse charge is performed at the current density greater than or equal to 250 mA/cm². It is found that the average particle size of the plurality of particles increases as the current density increases. It can be seen that the longer the time for performing the pulse process, the larger the average particle size of the plurality of particles. In this case, it can be seen that the larger the average particle size of the plurality of particles, the higher the energy density. One of the reasons why the energy density is increased is considered that the plurality of particles exist stably in the electrolyte. From the above, it was illustrated that by performing pulse charge at a current density greater than or equal to 250 mA/cm², the particle existed stably and the electrolyte having the high energy density was obtained. From Table 1, it is considered that when the current density is greater than or equal to 300 mA/cm² and greater than or equal to 350 mA/cm², the particle exists more stably, and the electrolyte having the high energy density is obtained.

### [Test example 2]

In Test example 2, in the same RF battery as in Test example 1, the first process and the second process were performed, and the condition of the second process was changed.

The compositions of the positive electrolyte and the negative electrolyte and the condition of the first process were the same as in Test example 1.

In the second process, the pulse process was performed, the current density of the pulse charge performed in the main process was made constant, and the charge time of the pulse charge was changed. In the pulse process of Test example 2, the current density of the pulse charge was set to 250 mA/cm². In Test example 2, the charge time of the pulse charge was set to the time in Table 2. In a test body 21, the charge time is 0.2 seconds. In a test body 22, the charge time is 1 second. In a test body 23, the charge time is 30 seconds. In a test body 24, the charge time is 300 seconds.

The average particle diameter of the plurality of particles contained in the electrolyte of each obtained test body was measured by the dynamic light scattering method. In addition, the energy density of the electrolyte of each obtained test body was measured. The average particle size and the energy density were measured in the same manner as in Test example 1. The results are illustrated in Table 2. In Table 2, similarly to Table 1, the time immediately before starting the pulse process is denoted as 0 h, the time two hours after starting the pulse process is denoted as 2 h, and the time four hours after starting the pulse process is denoted as 4 h. In Table 2, regarding the average particle size, a value immediately before the start of the pulse process in test body 21 is set as initial value 1, and the initial value 1 is illustrated as the ratio to initial value 1. In Table 2, regarding the energy density, a value after 2 hours from the start of the pulse process in test body 21 is set as the reference value 100%, and is illustrated as the relative value with respect to this reference value. Each numerical value in Table 2 includes a rounded approximate value. In test body 22 and test body 24, the plurality of particles in the electrolyte after 2 hours and 4 hours from the start of the pulse process had the average particle size less than or equal to 600 nm. In test body 22 and test body 24, the sedimentation rate of each particle in the electrolyte after 2 hours and 4 hours from the start of the pulse process was less than 1 mm/hour.

**[Table 2]**

| Test body | Charge time per cycle (second) | 0 h | | 2h | | 4h | |
|---|---|---|---|---|---|---|---|
| | | Average particle diameter | Energy density (%) | Average particle diameter | Energy density (%) | Average particle diameter | Energy density (%) |
| 21 | 0.2 | 1 | 100 | 1 | 100 | 1 | 100 |
| 22 | 1 | 1 | 100 | 5 | 108 | 8 | 108 |
| 23 | 30 | 1 | 100 | 30 | 167 | 50 | 167 |
| 24 | 300 | 1 | 100 | 50 | 167 | 80 | 150 |

As illustrated in Table 2, it can be seen that the plurality of particles are generated by setting the charge time of the pulse charge greater than or equal to 1 second. It is found that the longer the charging time of the pulse charge, the larger the average particle size of the plurality of particles. It can be seen that the longer the time for performing the pulse process, the larger the average particle size of the plurality of particles. In this case, it can be seen that the larger the average particle size of the plurality of particles, the higher the energy density. One of the reasons why the energy density is increased is considered that the plurality of particles exist stably in the electrolyte. It can be seen that the energy density after 4 hours in test body 24 is slightly low. It is considered that this is because the dissolution rate of each particle was slowed as the average particle diameter of the plurality of particles increased. From the above, it was illustrated that when the charge is performed at the current density greater than or equal to 250 mA/cm², the electrolyte having the high energy density can be obtained by adjusting the second charge condition.

### [Test example 3]

In Test example 3, in the same RF battery as in Test example 1, the first process and the second process were performed, and in the second process, a plurality of pulse processes and a plurality of sub-processes were performed.

The compositions of the positive electrolyte and the negative electrolyte and the condition of the first process were the same as in Test example 1.

After the first process, the pulse process and the sub-process were sequentially performed three times.

In each pulse process, the pulse charge was performed at the current density of 250 mA/cm². The charge time of the pulse charge was set to 8 seconds. The total time of the three pulse processes was 4 hours.

In each sub-process, the SOC in the immediately preceding pulse process was once lowered to 30% by the discharge, and the SOC once lowered by the charge was raised to 70% again.

The average particle diameter of the plurality of particles contained in the electrolyte of an obtained test body 31 was measured by the dynamic light scattering method. In addition, the energy density of the electrolyte of obtained test body 31 was measured. As a result, the average particle diameter of the plurality of particles in test body 31 was 40 nm. The energy density in test body 31 was 110% when the maximum value of the energy density in Test example 2 was set to 100%. It has been found that each particle can be made to have a certain size by repeatedly performing the pulse process and the sub-process in the second process.

The present invention is not limited to these examples, but is indicated by the claims, and is intended to include meanings equivalent to the claims and all modifications within the scope. For example, in each test example, the type of active material ion can be changed, the SOC in the first charge can be changed, and the conditions of the pulse charge and the pulse discharge in the second process can be changed. Depending on the type of the active material ion, the current density, and the like, the SOC in the first charge may be less than 60%.

### REFERENCE SIGNS LIST

1: RF battery, 1α, 1β, 1γ: RF battery system
10: battery cell
11: membrane
12: positive electrode cell, 13: negative electrode cell
14: positive electrode, 15: negative electrode
22: positive electrolyte tank, 23: negative electrolyte tank
3: electrolyte, 30: particle, 31: dispersion medium
42, 43: supply pipe, 44, 45: return pipe
46, 47: pump
5: cell frame, 50: frame body, 51: bipolar plate, 55: seal member
100: cell stack, 101: end plate, 102: fastening member
6: controller, 60: processor
7: power converter, 71: transformer facility, 8: power generation unit, 9: load
210: first battery cell, 220: second battery cell
222: positive electrode cell, 223: negative electrode cell
224, 225: supply pipe, 226, 227: return pipe
400: monitor cell
11: charge time, t2: discharge time, t0: standby time

## Claims

1. A redox flow battery operation method for performing charge and discharge by circulating an electrolyte between a tank and a first battery cell, the method comprising a main process that performs the charge at a current density greater than or equal to 250 mA/cm².

2. The redox flow battery operation method according to claim 1, comprising a preparation process that performs the charge such that a charge state of the electrolyte is greater than or equal to 60% and less than or equal to 100%,
wherein the main process is performed after the preparation process.

3. The redox flow battery operation method according to claim 1 or 2, comprising a pulse process that alternately and repeatedly performs pulse charge and pulse discharge,
wherein the pulse process includes the main process, and
the pulse charge is performed in the main process.

4. The redox flow battery operation method according to claim 3, wherein a charge time per cycle in the pulse charge is greater than or equal to 1 second and less than or equal to 10 minutes.

5. The redox flow battery operation method according to claim 3 or 4, comprising a sub-process that sequentially performs the discharge and the charge once between a plurality of pulse processes, the pulse process being performed a plurality of times,
wherein a change amount in the charge state of the electrolyte in the sub-process is larger than a change amount in the charge state of the electrolyte in the pulse process.

6. The redox flow battery operation method according to any one of claims 1 to 5, wherein the main process is performed by circulating a positive electrolyte and a negative electrolyte in a second battery cell,
the second battery cell is provided separately from the first battery cell,
the tank includes:
a positive electrolyte tank in which the positive electrolyte is stored; and
a negative electrolyte tank in which the negative electrolyte is stored, and
each of the first battery cell and the second battery cell is connected to the positive electrolyte tank and the negative electrolyte tank.

7. The redox flow battery operation method according to any one of claims 1 to 5, wherein the main process is performed by circulating a positive electrolyte or a negative electrolyte in a second battery cell,
the second battery cell is provided separately from the first battery cell,
the tank includes:
a positive electrolyte tank in which the positive electrolyte is stored; and
a negative electrolyte tank in which the negative electrolyte is stored,
the first battery cell is connected to the positive electrolyte tank and the negative electrolyte tank, and
the second battery cell is connected to the positive electrolyte tank or the negative electrolyte tank.

8. A redox flow battery system comprising:
a first battery cell;
a tank in which an electrolyte circulated in the first battery cell is stored; and
a controller that controls charge and discharge of the first battery cell using the electrolyte,
wherein the controller performs control to perform at least part of the charge at a current density greater than or equal to 250 mA/cm² based on a charge state of the electrolyte.

9. The redox flow battery system according to claim 8, wherein the controller performs control to perform the charge at the current density greater than or equal to 250 mA/cm² when the charge state of the electrolyte is greater than or equal to 60% and less than or equal to 100%.

10. The redox flow battery system according to claim 8 or 9, wherein the controller performs control such that pulse charge and pulse discharge are alternately and repeatedly performed and such that the pulse charge is performed at the current density greater than or equal to 250 mA/cm².

11. The redox flow battery system according to any one of claims 8 to 10,
wherein the controller controls the first battery cell to perform the charge at the current density greater than or equal to 250 mA/cm².

12. The redox flow battery system according to any one of claims 8 to 10, further comprising a second battery cell provided separately from the first battery cell,
wherein the tank includes:
a positive electrolyte tank in which a positive electrolyte is stored; and
a negative electrolyte tank in which a negative electrolyte is stored,
each of the first battery cell and the second battery cell is connected to the positive electrolyte tank and the negative electrolyte tank, and
the controller controls the second battery cell to perform the charge at the current density greater than or equal to 250 mA/cm².

13. The redox flow battery system according to any one of claims 8 to 10, further comprising a second battery cell provided separately from the first battery cell,
wherein the tank includes:
a positive electrolyte tank in which a positive electrolyte is stored; and
a negative electrolyte tank in which a negative electrolyte is stored,
the first battery cell is connected to the positive electrolyte tank and the negative electrolyte tank,
the second battery cell is connected to the positive electrolyte tank or the negative electrolyte tank, and
the controller controls the second battery cell to perform the charge at the current density greater than or equal to 250 mA/cm².
